# EUROPÄISCHE PATENTSCHRIFT

(11) **EP 0 819 707 B1**
(45) Veröffentlichungstag und Bekanntmachung des Hinweises auf die Patenterteilung: **14.03.2001**
(21) Anmeldenummer: 97110938.4
(22) Anmeldetag: 02.07.1997
(51) Int. Cl.: C08F 210/12, C08F 4/52, C08F 4/00, C08F 210/14

(54) **Verfahren zur Herstellung von hochverzweigten Polyisoolefinen**
Process for preparing highly branched polyisoolefins
Procédé de préparation de polymères d'iso-oléfines

(30) Priorität: 15.07.1996 DE 19628450
(43) Veröffentlichungstag der Anmeldung: 21.01.1998
(73) Patentinhaber: BAYER AG, 51368 Leverkusen (DE)
(72) Erfinder: Langstein, Gerhard, Dr., 51515 Kürten (DE); Obrecht, Werner, Dr., 47447 Moers (DE); Puskas, Judit Eva, Dr., London, Ontario, N6C 3Z6 (CA); Nuyken, Oskar, Prof. Dr., 81927 München (DE); Weiss, Karin, Dr., 95463 Bindlach (DE)

(56) Entgegenhaltungen:
- EP-A- 0 320 263
- EP-A- 0 344 021
- US-A- 5 084 522
- MARSALKO T M ET AL: "MULTI-ARM STAR POLYISOBUTYLENES 1. SYNTHESIS AND PROOF OF STRUCTURE" POLYMER BULLETIN, Bd. 31, Nr. 6, 1.Dezember 1993, Seiten 665-672, XP000412405

## Beschreibung

Die Erfindung betrifft ein Verfahren zur Herstellung von hochverzweigten Polyisoolefinen durch Umsetzung von Isoolefinen gegebenenfalls in Kombination mit konjugierten oder nicht-konjugierten Dienen und/oder kationisch polymerisierbaren, ein- oder mehrfach ungesättigten Verbindungen in einem Einstufenprozeß in Lösung, Suspension oder Gasphase.

Die kationische Polymerisation von Isoolefinen ist seit langem bekannt und beispielsweise beschrieben in J.P. Kennedy und B. Iván, Carbocationic Macromolecular Engingeering (1991). Die auf diese Weise hergestellten Butylkautschuke und Halobutylkautschuke werden in der Technik aufgrund ihrer physikalischen Eigenschaften insbesondere für die Herstellung von Reifenschläuchen und Innerliner für Reifen verwendet. Dabei sind die Verarbeitungseigenschaften der so hergestellten Butylkautschuke beim Mischen, Walzen, Extrudieren und Kalandrieren besonders wichtig. Die Verarbeitungseigenschaften sind insbesondere gekoppelt an ein ausgewogenes Verhältnis von Rohfestigkeit des Kautschuks (green strength) und Spannungsrelaxation (Stress relaxation). Dies kann z.B. durch Mischen der entsprechenden Polymeren mit unterschiedlichen Molekulargewichten zu Produkten mit einer maßgeschneiderten, breiten Molekulargewichtsverteilung erreicht werden. Das Verfahren ist jedoch umständlich. Die direkte Synthese von Butylkautschuken mit einer breiten Molekulargewichtsverteilung und statistischer Langkettenverzweigung mit den gewünschten Verarbeitungseigenschaften gelingt beispielsweise durch Copolymerisation von Isobuten mit Isopren in Gegenwart von bifunktionellen Monomeren, wie Divinylbenzol, 2,5-Hexadien oder Vinylbenzylchlorid. Ein großer Nachteil dieser Copolymerisation ist jedoch die Bildung von hohen Gelanteilen im Kautschuk (siehe z.B. H.-C. Wang, K.W. Powers, J.V. Fusco, ACS Meeting, Mai 1989, Paper Nr. 21).

Deshalb wurde zur Einführung von Langkettenverzweigungen eine weitere Methode eingeführt. Die Copolymerisation von Isobuten und Isopren in Gegenwart von multifunktionellen Verzweigungsagenzien. Darunter werden lösliche Polymere mit funktionellen Gruppen verstanden, die unter den Prozeßbedingungen entweder eine Polymerisation initiieren (grafting from durch tertiäre Alkylgruppen) oder mit dem kationischen Ende einer wachsenden Polymerkette reagieren (grafting onto durch reaktive Doppelbindungen). Als multifunktionelle Verzweigungsagenzien werden hydrochlorierte Poly(styrol-coisoprene), chlorierte Polystyrole, Polyisoprene oder Styrolbutadienblockcopolymere erwähnt (H.C. Wang, K.W. Powers, J.V. Fusco, ACS-Meeting, 9. bis 12.05.1989; EP-A 320 263). Die entstehenden Polymergemische werden "Star Branched Butyls" genannt. Ein Nachteil dieser Vorgehensweise ist die Notwendigkeit von separaten zusätzlichen Prozeßschritten zur Polymerisation bzw. Halogenierung der Verzweigungsagenzien. Ein Charakteristikum dieser Vorgehensweise ist die simultane Entstehung von linearen und verzweigten Polymeren während der Polymerisation.

Die Herstellung von "Multi-Arm Star"-Polyisobutenen durch Umsetzung lebender Polyisobutenpolymerer mit Divinylbenzol wird in Polymer Bull. 31 (1993) 665 beschrieben. Diese Polyisobutene werden nach der "arm-first, core-last"-Methode hergestellt, die in US 5 458 796 dargelegt wird. Eine weitere Möglichkeit zur Herstellung verzweigter Butylkautschuke ist der Einsatz von multifunktionellen Initiatoren, wie in US 5 084 522 beschrieben. Diese Methode wird auch "core-first, arm-last"-Methode genannt. Wegen der separaten Prozeßschritte zur Herstellung des multifunktionellen Initiators sowie der Bildung von Homopolymeren durch Übertragungsreaktionen ist auch diese Verfahrensweise mit einigen Nachteilen behaftet.

Gegenstand der vorliegenden Erfindung ist daher ein einstufiges Verfahren zur Herstellung von hochverzweigten Polyisoolefinen, das dadurch gekennzeichnet ist, daß man Isoolefine gegebenenfalls in Kombination mit konjugierten oder nicht konjugierten Dienen in Lösung, Suspension oder in der Gasphase in Gegenwart von bifunktionellen Monomeren, die mindestens eine zur kationischen Polymerisation fähige Gruppe und mindestens eine Gruppe besitzen, die als Initiator für die kationische Polymerisation von Isoolefinen dient (Inimere), bei Temperaturen von +20 bis -100°C, gegebenenfalls in Anwesenheit von inerten, organischen Lösungsmitteln, und in Gegenwart von Alkylalumoxanen (Coinitiator) polymerisiert.

Als Isoolefine werden bevorzugt solche der Formel 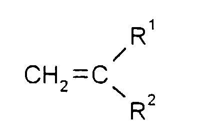 eingesetzt mit R¹ = Me, R² für C₁-C₆-Alkyl, wie Methyl, Ethyl oder Propyl. Besonders bevorzugt sind Isobuten und 2-Methylbuten-1, insbesondere Isobuten. Als konjugierte oder nicht konjugierte Diene kommen solche mit 4 bis 20, bevorzugt 4 bis 10, besonders bevorzugt 4 bis 6 Kohlenstoffatomen für das erfindungsgemäße Verfahren in Frage, wie Butadien, Isopren, Piperylen, 2,3-Dimethylbutadien, 2,4-Dimethylpentadien-1,3, Cyclopentadien, Methylcyclopentadien, Limonen, Myrcen und/oder 1,3-Cyclohexadien, bevorzugt Isopren, Piperylen und/oder 2,3-Dimethylbutadien, besonders bevorzugt Isopren.

Ganz besonders bevorzugt ist die Herstellung von Butylkautschuk, d.h. die Copolymerisation von Isobuten mit Isopren.

Als bifunktionelle Monomere (Inimere) kommen aromatische und/oder aliphatische Vinyl- und Isoprenverbindungen der allgemeinen Formeln (I) bis (III) in Frage 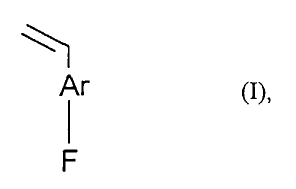 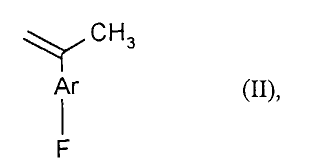 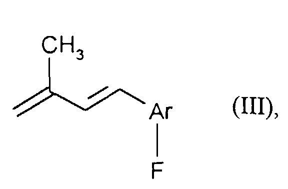 worin
- F: einer funktionellen, organischen Gruppe aus der Reihe -CR³₂X mit X für OR, Cl, Br, J, CN, N₃ oder SCN und R³ für H und/oder C₁-C₂₀-Alkyl entspricht und
- Ar: für C₆H₄ oder C₁₀H₈ steht.

Als C₁-C₂₀-Alkylreste werden insbesondere genannt: Methyl, Ethyl, Propyl, Butyl, Hexyl, Octyl, Decyl und Eicosyl, bevorzugt Methyl, Ethyl und Propyl, ganz besonders bevorzugt Methyl.

In das erfindungsgemäße Verfahren werden bevorzugt Inimere der nachfolgenden Formel (IV) eingesetzt: 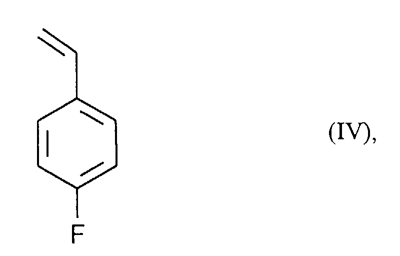 worin
- F: die obengenannte Bedeutung besitzt.

Ganz besonders bevorzugt werden als Inimere eingesetzt: 4-Vinylbenzylchlorid und/oder 4-Isoprenylbenzylchlorid.

Das molare Verhältnis von Inimer zu den eingesetzten Monomeren liegt üblicherweise im Bereich von 1:10⁴ bis 1:10, bevorzugt 1:10³ bis 1:50, ganz besonders bevorzugt 1:10 bis 1:20.

Bei der Copolymerisation der Isoolefine mit den mit Isoolefinen copolymerisierbaren Dienen beträgt das molare Verhältnis von Isoolefinen zu copolymerisierbaren Monomeren üblicherweise 1:10³ bis 1:10, bevorzugt 1:10² bis 1:50.

Das erfindungsgemäße Verfahren kann in Gegenwart von inerten, organischen Lösungsmitteln, wie linearen oder verzweigten Kohlenwasserstoffen und/oder linearen und verzweigten halogenierten Kohlenwasserstoffen, wie Pentan, Hexan und/oder Methylenchlorid, durchgeführt werden. Die Menge der eingesetzten inerten Lösungsmittel ist dabei nicht kritisch. Die geeignete Menge kann leicht durch entsprechende Vorversuche ermittelt werden.

Neben den Inimeren ist es für das erfindungsgemäße Verfahren erforderlich, Alkylalumoxane als Coinitiatoren einzusetzen. Als Alkylalumoxane eignen sich bevorzugt Methyl-, Ethyl- und/oder Butylalumoxane, insbesondere Methylalumoxane, wie sie z.B. in Polyhedron Vol. 7, Nr. 22/23 (1988), S. 2375 ff. beschrieben sind.

Nach dem erfindungsgemäßen Verfahren werden die Alumoxane und die erwähnten Inimere in einem molaren Verhältnis von 1:10⁴ bis 1:10³, bevorzugt von 1:10³ bis 1:3, ganz besonders bevorzugt von 1:10² bis 1:2 eingesetzt.

Für die erfindungsgemäße Polymerisation können noch geeignete Additive zugesetzt werden. Geeignete Additive sind beispielsweise Elektronendonatoren, wie Dimethylacetamid und/oder Dimethylsulfoxid, oder Protonenfallen, wie Di-tert.-butylpyridin (siehe z.B. US 5 169 914).

Die Zugabe des Inimers und des Coinitiators zum zu polymerisierenden Monomergemisch kann gleichzeitig, nacheinander, kontinuierlich oder diskontinuierlich erfolgen. Selbstverständlich können die Alumoxane in bekannter Weise auch in situ durch Hydrolyse entsprechender Aluminiumalkyle erzeugt werden.

Das erfindungsgemäße Verfahren kann im Temperaturbereich von +20 bis -100°C, bevorzugt im Temperataurbereich von -20 bis -90°C, insbesondere von -40 bis -80°C, durchgeführt werden.

Das erfindungsgemäße Verfahren kann in Lösung, Suspension oder in der Gasphase durchgeführt werden. Bevorzugt wird in Lösung gearbeitet. Außerdem ist es möglich, das Verfahren als Batch-, Zulauf- oder kontinuierliches Verfahren durchzuführen, wobei die Reaktions- bzw. Verweilzeiten von 2 Sekunden bis 20 Stunden, bevorzugt 60 Sekunden bis 1 Stunde, insbesondere 15 bis 40 Minuten betragen.

Wie erwähnt, führt das erfindungsgemäße Verfahren zu hochverzweigten Polyisoolefinen, wobei der Verzweigungsgrad und das Molekulargewicht insbesondere von der Reaktivität des Inimers, vom Coinitiator, von der Konzentration des Coinitiators, vom molaren Verhältnis von Monomer zu Inimer, von der Reaktionstemperatur und der Reaktionszeit abhängt. Es ist deshalb möglich, durch geeignete Variation der genannten Parameter den Verzweigungsgrad und das Molekulargewicht des herzustellenden Polyisoolefins individuell einzustellen.

Das erfindungsgemäße Verfahren kann beispielsweise so durchgeführt werden, daß der auf Reaktionstemperatur gekühlte Reaktor mit gereinigtem Lösungsmittel und den Monomeren beschickt wird und nach Temperieren des Reaktors auf die gewünschte Reaktionstemperatur die benötigte Menge an Inimer zudosiert und mit der vorgelegten Monomermischung verrührt wird. Anschließend wird die benötigte Menge an Coinitiator zudosiert und der Reaktorinhalt kräftig durchmischt. Alle Manipulationen werden unter Schutzgas durchgeführt. Der Verlauf der Polymerisation wird anhand der Wärmeentwicklung verfolgt. Nach Beendigung der exothermen Reaktion wird z.B. mit 2,5-Di-tert.-butyl-4-methylphenol, gelöst in Ethanol, die Polymerisation abgestoppt. Das erhaltene Polymer wird dann auf die übliche Art und Weise durch z.B. Strippen aufgearbeitet.

Die Vorteile des erfindungsgemäßen Verfahrens liegen insbesondere in der einfachen, einstufigen Reaktionsweise, wobei definierte, hochverzweigte Polyisoolefine, bevorzugt Butylkautschuke, erhalten werden, die überlegene Verarbeitungseigenschaften aufweisen.

### Beispiele

Zur Charakterisierung der Molekulargewichtsverteilung und des Verzweigungsgrades wurden die Polymere mit Hilfe der Gelpermeationschromatographie/Viskosimetrie-Kopplung untersucht. Das Instrument für die GPC-Viskosimetrie-Kopplung war mit acht Styragel Säulen der Größen 100, 1000(2x), 10⁴(2x), 10⁵(2x) und 10⁶ Angström ausgerüstet und besaß eine Gesamtlänge von 976 cm. Das Elutionsmittel Tetrahydrofuran wurde mit 0,5 ml/min gepumpt. 1,93 ml Fraktionen wurden on-line in einen Ubbelohde Viskosimeter bei 30°C vermessen. Die Mᵥ-Werte wurden mit den Konstanten K = 5 x 10⁻⁴ dl/g und α = 0,6 berechnet.

### Beispiel 1

In einem 2 l Rundkolben versehen mit Rührer und Thermometer wurden 1000 ml trockenes Hexan vorgelegt, auf -60°C gekühlt und mit 100 mmol Isopren sowie 100 mmol Vinylbenzylchlorid (INIMER) versetzt. Anschließend wurden 200 g Isobuten einkondensiert. Die Polymerisation wurde durch Zugabe von 12 mmol Methylaluminoxan (30 %ige Lösung in Toluol) bei -60°C gestartet. Nach dreistündigem Rühren bei -60°C wurde die Reaktion mit Ethanol gestoppt. Es konnten 134 g (Umsatz: 64,8 %) Polymer isoliert werden. Die Charakterisierung mit Hilfe der GPC/Viskosimetrie ergab eine Molekulargewichtsverteilung mit Mₙ = 11 kg/mol und einem Verzweigungsgrad von ca. 73 %. Der Staudinger-Index betrug 0,3 dl/g. Der Gelgehalt betrug 2,7 %.

### Beispiel 2

Durchgeführt analog Beispiel 1, jedoch mit 220 g Isobuten und 200 mmol Vinylbenzylchlorid (INIMER). Der Umsatz nach 3 Stunden betrug 18,3 %. Der Staudinger-Index betrug 0,23 dl/g. Der Gelgehalt betrug 4,6 %. Die Charakterisierung mit Hilfe der GCP/Viskosimetrie ergab eine Molekulargewichtsverteilung mit Mₙ = 13 kg/mol, M_{w} = 58 kg/mol und einem Verzweigungsgrad von ca. 80 %.

## Patentansprüche

1. Verfahren zur Herstellung von hochverzweigten Polyisoolefinen, dadurch gekennzeichnet, daß man Isoolefine gegebenenfalls in Kombination mit konjugierten oder nicht konjugierten Dienen in einem einstufigen Verfahren in Lösung, Suspension oder in der Gasphase in Gegenwart von bifunktionellen Monomeren, die mindestens eine zur kationischen Polymerisation fähige Gruppe und mindestens eine Gruppe besitzen, die als Initiator für die kationische Polymerisation von Isoolefinen dient (Inimer), bei Temperaturen von +20 bis -100°C, gegebenenfalls in Anwesenheit von inerten, organischen Lösungsmitteln und in Gegenwart von Alkylalumoxanen (Coinitiator) polymerisiert.

2. Verfahren nach Anspruch 1, dadurch gekennzeichnet, daß man als Isoolefine Isobuten und/oder 2-Methylbuten-1 einsetzt.

3. Verfahren nach Ansprüchen 1 und 2, dadurch gekennzeichnet, daß man als Diene Isopren, Piperylen und/oder 2,3-Dimethylbutadien einsetzt.

4. Verfahren nach Ansprüchen 1 bis 3, dadurch gekennzeichnet, daß man als bifunktionelle Monomere solche der Formeln (I) bis (III) 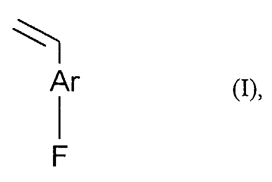 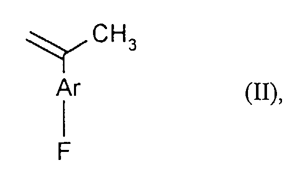 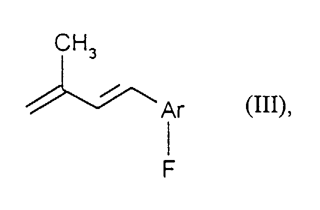 worin
F einer funktionellen, organischen Gruppe aus der Reihe -CR³₂X mit X für OR, Cl, Br, J, CN, N₃ oder SCN und R³ für H und/oder C₁-C₂₀-Alkyl entspricht und
Ar für C₆H₄ oder C₁₀H₈ steht,
einsetzt.

5. Verfahren nach Ansprüchen 1 bis 4, dadurch gekennzeichnet, daß man als Alkylalumoxane Methyl-, Ethyl- und/oder Butylalumoxane einsetzt.

6. Verfahren nach Ansprüchen 1 bis 5, dadurch gekennzeichnet, daß man die Alkylalumoxane und die bifunktionellen Monomeren im molaren Verhältnis von 1:10⁴ bis 1:10³ einsetzt.

## Claims

1. A process for producing highly branched polyisoolefmes, characterised in that isoolefines, optionally in combination with conjugated or unconjugated dienes, are polymerised in a single-stage process in solution, suspension or in the gas phase in the presence of bifunctional monomers which contain at least one group capable of cationic polymerisation and at least one group which serves as an initiator for the cationic polymerisation of isoolefines (inimer), at temperatures from +20 to -100°C, optionally in the presence of inert, organic solvents, and in the presence of alkylalumoxanes (coinitiator).

2. A process according to claim 1, characterised in that isobutene and/or 2-methylbutene-1 are used as the isoolefines.

3. A process according to claims 1 and 2, characterised in that isoprene, piperylene and/or 2,3-dimethylbutadiene are used as the dienes.

4. A process according to claims 1 to 3, characterised in that the bifunctional monomers used are those of formulae (I) to (III) 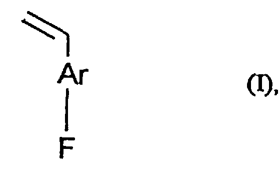 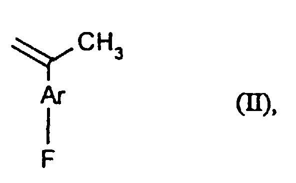 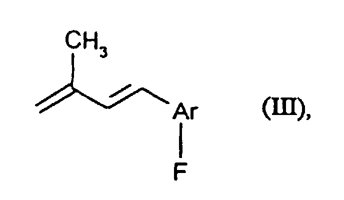 where
F corresponds to a functional organic group from the series -CR³₂X, where X corresponds to OR, Cl, Br, I, CN, N₃ or SCN and R³ corresponds to H and/or a C₁-C₂₀ alkyl, and
Ar represents C₆H₄ or C₁₀H₈.

5. A process according to claims 1 to 4, characterised in that methyl, ethyl and/or butylalumoxanes are used as the alkylalumoxanes.

6. A process according to claims 1 to 5, characterised in that the alkylalumoxanes and the bifunctional monomers are used in a molar ratio from 1:10⁴ to 1:10³.

## Revendications

1. Procédé pour la préparation de polyisooléfines fortement ramifiées, caractérisé en ce que l'on polymérise les isooléfines, éventuellement en combinaison avec des diènes conjugués ou non, dans une opération en un seul stade en solution, en suspension ou en phase gazeuse, en présence de monomères bifonctionnels (inimères) portant au moins un groupe apte à la polymérisation cationique et au moins un groupe servant d'inducteur pour la polymérisation cationique des isooléfines, à des températures allant de +20 à -100°C, éventuellement en présence de solvants organiques inertes et en présence d'alkylalumoxanes (inducteurs auxiliaires).

2. Procédé selon la revendication 1, caractérisé en ce que les isooléfines mises en oeuvre sont l'isobutène et/ou le 2-méthylbutène-1.

3. Procédé selon les revendications 1 et 2, caractérisé en ce que les diènes mis en oeuvre sont l'isoprène, le pipérylène et/ou le 2,3-diméthylbutadiène.

4. Procédé selon les revendications 1 à 3, caractérisé en ce que les monomères bifonctionnels mis en oeuvre répondent aux formules (I) à (III) 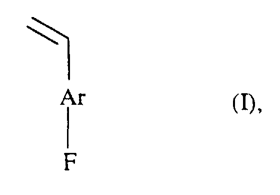 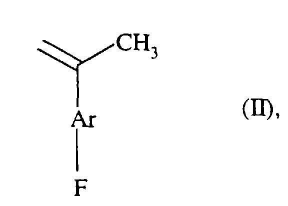 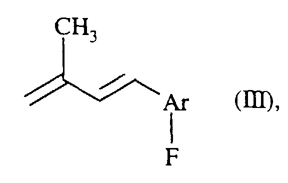 dans lesquelles
F représente un groupe organique fonctionnel de formule globale -CR³₂X dans laquelle X représente OR, Cl, Br, I, CN, N₃ ou SCN et R³ représente H et/ou un groupe alkyle en C₁-C₂₀ et
Ar représente C₆H₄ ou C₁₀H₈.

5. Procédé selon les revendications 1 à 4, caractérisé en ce que les alkylalumoxanes mis en oeuvre sont des méthyl-, des éthyl- et/ou des butylalumoxanes.

6. Procédé selon les revendications 1 à 5, caractérisé en ce que les alkylalumoxanes et les monomères bifonctionnels sont mis en oeuvre à un rapport molaire de 1 : 10⁴ à 1 : 10³.
